(19) Europäisches Patentamt / European Patent Office / Office européen des brevets

(11) **EP 4 318 311 A1**

(12) **EUROPEAN PATENT APPLICATION**
published in accordance with Art. 153(4) EPC

(43) Date of publication:
**07.02.2024 Bulletin 2024/06**

(21) Application number: **22836675.3**

(22) Date of filing: **14.06.2022**

(51) International Patent Classification (IPC):
***G06N 3/02*** (2006.01)

(52) Cooperative Patent Classification (CPC):
**G06N 3/02**

(86) International application number:
**PCT/CN2022/098621**

(87) International publication number:
**WO 2023/279921 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2021 CN 202110773754**
**31.08.2021 CN 202111014266**

(71) Applicant: **Huawei Technologies Co., Ltd.**
**Shenzhen, Guangdong 518129 (CN)**

(72) Inventor: **MENG, Qingchun**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **NEURAL NETWORK MODEL TRAINING METHOD, DATA PROCESSING METHOD, AND APPARATUSES**

(57) This application provides a training method and apparatus for a neural network model, and a processing data method and apparatus in the field of artificial intelligence. The training method includes: training a neural network model based on a second training data set, to obtain a target neural network model, where the neural network model includes an expert network layer, the expert network layer includes a first expert network of a first service field, an initial weight of the first expert network is determined based on a first word vector matrix, and the first word vector matrix is obtained through training based on a first training data set of the first service field. According to the method in this application, training time of a model can be reduced, and training efficiency of the model can be improved.

600

S610 — Obtain a knowledge graph of at least one service field

S620 — Obtain a training data set of the at least one service field

S630 — Obtain at least one word vector matrix, where the at least one word vector matrix is respectively obtained through training based on the training data set of the at least one service field

S640 — Obtain a second training data set

S650 — Train a neural network model based on the second training data set, to obtain a target neural network model, where the neural network model includes an expert network layer, and an initial weight of at least one expert network in the expert network layer is respectively determined based on the at least one word vector matrix

FIG. 6

EP 4 318 311 A1

## Description

This application claims priority to Chinese Patent Application No. 202110773754.0, filed with the China National Intellectual Property Administration on July 8, 2021 and entitled "TRAINING METHOD AND APPARATUS FOR NATURAL LANGUAGE MODEL", which is incorporated herein by reference in its entirety.

This application claims priority to Chinese Patent Application No. 202111014266.8, filed with the China National Intellectual Property Administration on August 31, 2021 and entitled "TRAINING METHOD AND APPARATUS FOR NEURAL NETWORK MODEL, AND DATA PROCESSING METHOD AND APPARATUS", which is incorporated herein by reference in its entirety.

## TECHNICAL FIELD

This application relates to the field of artificial intelligence, and more specifically, to a training method and apparatus for a neural network model, and a data processing method and apparatus.

## BACKGROUND

Artificial intelligence (artificial intelligence, AI) is a theory, a method, a technology, or an application system that simulates, extends, and expands human intelligence by using a digital computer or a machine controlled by the digital computer, to perceive an environment, obtain knowledge, and obtain an optimal result by using the knowledge. In other words, the artificial intelligence is a branch of computer science and attempts to understand essence of intelligence and produce a new intelligent machine that can react in a manner similar to human intelligence. The artificial intelligence is to research design principles and implementation methods of various intelligent machines, to enable the machines to have functions of perception, reasoning, and decision-making. Research in the field of artificial intelligence includes robotics, natural language processing, computer vision, decision-making and reasoning, human-machine interaction, recommendation and search, AI basic theories, and the like.

In the field of deep learning, performance of a neural network model can be improved through large-scale training. Generally, the neural network model processes all inputs of the model based on a same parameter. When a quantity of parameters of the model increases, a quantity of computing resources required by the model also increases. A mixture of experts (mixture of experts, MoE) includes a plurality of expert networks, and each expert network has a different parameter. In the MoE, different expert networks in a model may be selectively activated to participate in calculation for different inputs. In this way, a quantity of parameters that actually participate in calculation can be greatly reduced, and a quantity of required computing resources is reduced, so that a trillion-scale model or even a larger-scale model may be trained.

However, training time required by a neural network model using the MoE is long, affecting use of the model.

Therefore, how to improve training efficiency of the model becomes an urgent problem to be resolved.

## SUMMARY

This application provides a training method and apparatus for a neural network model, and a data processing method and apparatus, to reduce training time of a model and improve training efficiency of a model.

According to a first aspect, a training method for a neural network model is provided. The method includes: obtaining a first word vector matrix, where the first word vector matrix is obtained through training based on a first training data set of a first service field; obtaining a second training data set; and training a neural network model based on the second training data set, to obtain a target neural network model, where the neural network model includes an expert network layer, the expert network layer includes a first expert network of the first service field, and an initial weight of the first expert network is determined based on the first word vector matrix.

According to the solution in this embodiment of this application, a word vector matrix is obtained through training based on a training data set, and the word vector matrix includes a large quantity of semantic information. Weights of some or all expert networks in a model are initialized by using the word vector matrix, so that the semantic information can be introduced into the expert network, to provide prior knowledge for the expert network, and reduce training time. Especially for a large-scale neural network model, the solution in this embodiment of this application can greatly reduce training time. In addition, introduction of the semantic information into the expert network can effectively improve a semantic representation capability of the expert network, to improve training performance of the model.

With reference to the first aspect, in some implementations of the first aspect, the method further includes: obtaining a second word vector matrix, where the second word vector matrix is obtained through training based on a third training data set of a second service field, the expert network layer further includes a second expert network of the second service field, and an initial weight of the second expert network is determined based on the second word vector matrix.

In the solution in this embodiment of this application, different word vector matrices are obtained through training based on training data sets of different service fields, and have different semantic information. When different expert networks in the expert network layer are initialized by using different word vector matrices, the different expert networks have different semantic representation capabilities, and semantic combinations of the different expert networks can further improve a semantic understanding capability of a natural language, and further improve performance of the model.

With reference to the first aspect, in some implementations of the first aspect, the expert network layer is configured to process, through the selected first expert network, data input into the expert network layer, and the first expert network is selected based on the data input into the expert network layer.

With reference to the first aspect, in some implementations of the first aspect, the first training data set is determined based on a first knowledge graph of the first service field.

In the solution in this embodiment of this application, a training data set of a service field may be constructed by using a knowledge graph of the service field, and the knowledge graph of the service field can indicate a relationship between entities in the service field. This helps learn knowledge of the service field for a word vector matrix, and improve a semantic representation capability.

With reference to the first aspect, in some implementations of the first aspect, that the first training data set is determined based on a first knowledge graph of the first service field includes: At least one first text sequence in the first training data set is generated based on at least one first triplet in the first knowledge graph, and three words in the first triplet respectively represent a subject in the first service field, an object in the first service field, and a relationship between the subject and the object.

A triplet may be represented in a form of a triplet (subject, relationship, object). The subject and object are concepts in the service field.

A text sequence may be generated based on a triplet. In other words, a triplet may form a sentence, that is, a text sequence.

For example, the triplet may be converted into the sentence by using a language model. The language model may be an n-gram (n-gram) language model. For example, n may be 2, or n may be 3.

With reference to the first aspect, in some implementations of the first aspect, that the first word vector matrix is obtained through training based on a first training data set of a first service field includes: The first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

The word vector generation model may include an input layer, a hidden layer, and an output layer. The hidden layer is a fully connected layer.

A weight of the hidden layer may also be referred to as an embedding matrix (embedding matrix) or a word vector matrix.

Optionally, the target word in the at least one first text sequence is the object in the at least one first triplet.

Optionally, the target word in the at least one first text sequence is the subject in the at least one first triplet.

Optionally, the target word in the at least one first text sequence is the relationship in the at least one first triplet.

With reference to the first aspect, in some implementations of the first aspect, that an initial weight of the first expert network is determined based on a first word vector matrix includes: The initial weight of the first expert network is the first word vector matrix.

With reference to the first aspect, in some implementations of the first aspect, that an initial weight of the first expert network is determined based on a first word vector matrix includes: The initial weight of the first expert network is obtained by adjusting the first word vector matrix.

With reference to the first aspect, in some implementations of the first aspect, the neural network model is a natural language processing (natural language processing, NLP) model or a speech processing model.

If the neural network model is the NLP model, data in the second training data set may be text data.

If the neural network model is the speech processing model, data in the second training data set may be speech data.

For example, the speech processing model may be an end-to-end speech processing model. For example, the end-to-end speech processing model may be a listen, attend, spell (listen, attend, spell, LAS) model.

According to a second aspect, a data processing method is provided, including: obtaining to-be-processed data; and

processing the to-be-processed data by using a target neural network model, where the target neural network model is obtained by training a neural network model based on a second training data set, the neural network model includes an expert network layer, the expert network layer includes a first expert network of a first service field, an initial weight of the first expert network is determined based on a first word vector matrix, and the first word vector matrix is obtained through training based on a first training data set of the first service field.

According to the solution in this embodiment of this application, a word vector matrix is obtained through training based on a training data set, and the word vector matrix includes a large quantity of semantic information. Weights of some or all expert networks in a model are initialized by using the word vector matrix, so that the semantic information can be introduced into the expert network, to provide prior knowledge for the expert network, and reduce training time. Especially for a large-scale neural network model, the solution in this embodiment of this application can greatly reduce training time. In addition, introduction of the semantic information into the expert network can effectively improve a semantic representation capability of the expert network, to improve performance of the target neural network model.

With reference to the second aspect, in some implementations of the second aspect, the expert network layer further includes a second expert network of a second service field, an initial weight of the second expert network is determined based on a second word vector matrix, and the second word vector matrix is obtained through training based on a third training data set of the second service field.

With reference to the second aspect, in some implementations of the second aspect, the expert network layer is configured to process, through the selected first expert network, data input into the expert network layer, and the first expert network is selected based on the data input into the expert network layer.

With reference to the second aspect, in some implementations of the second aspect, the first training data set is determined based on a first knowledge graph of the first service field.

With reference to the second aspect, in some implementations of the second aspect, that the first training data set is determined based on a first knowledge graph includes: At least one first text sequence in the first training data set is generated based on at least one first triplet in the first knowledge graph, and three words in the first triplet respectively represent a subject in the first service field, an object in the first service field, and a relationship between the subject and the object.

With reference to the second aspect, in some implementations of the second aspect, that the first word vector matrix is obtained through training based on a first training data set of a first service field includes: The first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

With reference to the second aspect, in some implementations of the second aspect, that an initial weight of the first expert network is determined based on a first word vector matrix includes: The initial weight of the first expert network is the first word vector matrix.

With reference to the second aspect, in some implementations of the second aspect, the neural network model is a natural language processing NLP model or a speech processing model.

According to a third aspect, a training apparatus for a neural network model is provided. The apparatus includes a unit configured to perform the method in any one of the implementations of the first aspect.

According to a fourth aspect, a data processing apparatus is provided. The apparatus includes a unit configured to perform the method in any one of the implementations of the second aspect.

It should be understood that extensions of, limitations on, explanations for, and descriptions of corresponding content in the first aspect are also applicable to same content in the second aspect, the third aspect, and the fourth aspect.

According to a fifth aspect, a training apparatus for a neural network model is provided. The apparatus includes: a memory, configured to store a program; and a processor, configured to execute the program stored in the memory. When the program stored in the memory is executed, the processor is configured to perform the method in any one of the implementations of the first aspect.

The processor in the fifth aspect may be a central processing unit (central processing unit, CPU), or may be a combination of a CPU and a neural network operation processor. The neural network operation processor herein may include a graphics processing unit (graphics processing unit, GPU), a neural-network processing unit (neural-network processing unit, NPU), a tensor processing unit (tensor processing unit, TPU), and the like. The TPU is an artificial intelligence accelerator-specific integrated circuit fully customized by Google (Google) for machine learning.

According to a sixth aspect, a data processing apparatus is provided. The apparatus includes: a memory, configured to store a program; and a processor, configured to execute the program stored in the memory. When the program stored in the memory is executed, the processor is configured to perform the method in any one of the implementations of the second aspect.

The processor in the sixth aspect may be a CPU, or may be a combination of a CPU and a neural network operation processor. The neural network operation processor herein may include a GPU, an NPU, a TPU, and the like.

According to a seventh aspect, a computer-readable medium is provided. The computer-readable medium stores program code to be executed by a device, and the program code is used to perform the method in any one of the implementations of the first aspect or the second aspect that is to be performed.

According to an eighth aspect, a computer program product including instructions is provided. When the computer program product runs on a computer, the computer is enabled to perform the method in any one of the implementations of the first aspect or the second aspect.

According to a ninth aspect, a chip is provided. The chip includes a processor and a data interface. The processor reads, through the data interface, instructions stored in a memory, to perform the method in any one of the implementations of the first aspect or the second aspect.

Optionally, in an implementation, the chip may further include the memory, and the memory stores the instructions. The processor is configured to execute the instructions stored in the memory. When the instructions are executed, the processor is configured to perform the method in any one of the implementations of the first aspect or the second aspect.

## BRIEF DESCRIPTION OF DRAWINGS

FIG. 1 is a schematic diagram of a dialog system according to an embodiment of this application;
FIG. 2 is a schematic diagram of a processing process of a word vector generation model according to an embodiment of this application;
FIG. 3(a), FIG. 3(b), and FIG. 3(c) are schematic diagrams of a natural language processing system according to an embodiment of this application;
FIG. 4 is a schematic diagram of a system architecture according to an embodiment of this application;
FIG. 5 is a schematic diagram of a training apparatus for a neural network model according to an embodiment of this application;
FIG. 6 is a schematic flowchart of a training method for a neural network model according to an embodiment of this application;
FIG. 7 is a schematic flowchart of a data processing method according to an embodiment of this application;
FIG. 8 is a schematic block diagram of a training apparatus for a neural network model according to an embodiment of this application;
FIG. 9 is a schematic block diagram of a data processing apparatus according to an embodiment of this application;
FIG. 10 is a schematic block diagram of another training apparatus for a neural network model according to an embodiment of this application; and
FIG. 11 is a schematic block diagram of another data processing apparatus according to an embodiment of this application.

## DESCRIPTION OF EMBODIMENTS

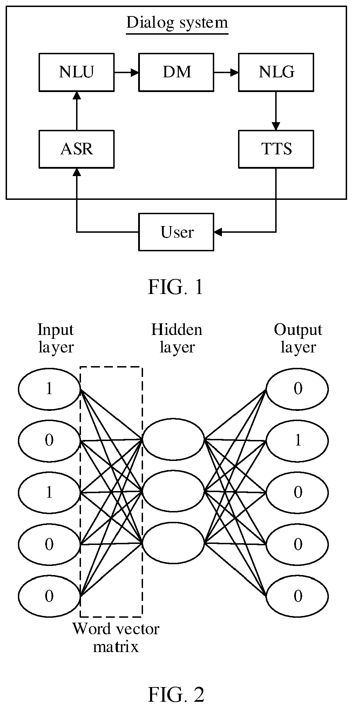

The following describes the technical solutions in this application with reference to the accompanying drawings.
Embodiments of this application may be applied to the field of natural language processing or the field of speech processing.
An example in which the solutions in embodiments of this application are applied to a dialog system is used below for description.
The dialog system is an important application in the field of natural language processing. As shown in FIG. 1, the dialog system includes an automatic speech recognition (automatic speech recognition, ASR) subsystem, a natural language understanding (natural language understanding, NLU) subsystem, a dialog management (dialog manager, DM) subsystem, a natural language generation (natural language generation, NLG) subsystem, and a text to speech (text to speech, TTS) subsystem.

The ASR subsystem converts audio information input by a user into text information. The NLU subsystem analyzes the text information obtained by the ASR subsystem to obtain an intention of the user. The DM subsystem performs a corresponding action, for example, querying a knowledge base, based on the intention of the user obtained by the NLU subsystem and a current dialog status, and returns a result. The NLG subsystem generates text data based on the result returned by the DM subsystem. The TTS subsystem converts the text data into audio data and feeds back the audio data to the user.

The NLU subsystem may obtain or optimize, by using the solutions in embodiments of this application, a neural network model applicable to natural language understanding. According to the solutions in embodiments of this application, training efficiency of the neural network model can be improved, and the neural network model can be obtained more quickly.

It should be understood that herein, only an example in which the solutions in embodiments of this application are applied to the natural language understanding subsystem in the dialog system is used for description, and does not constitute a limitation on the solutions in embodiments of this application. The solutions in embodiments of this application may be further applied to another scenario related to natural language understanding.

Because embodiments of this application relate to massive applications of neural networks, for ease of understanding, the following first describes terms and concepts related to the neural network that may be involved in embodiments of this application.

(1) Neural network

The neural network may include a neuron. The neuron may refer to an operation unit that uses $x_s$ and an intercept of 1 as an input. An output of the operation unit may be as follows:

$$h_{W,b}(x) = f(W^T x) = f(\sum_{s=1}^{n} W_s x_s + b).$$

s=1, 2, ..., or n, n is a natural number greater than 1, $W_s$ is a weight of $x_s$, and b is a bias of the neuron. f is an activation function (activation function) of the neuron, and is used to introduce a nonlinear feature into the neural network, to convert an input signal in the neuron into an output signal. The output signal of the activation function may be used as an input of a next convolutional layer, and the activation function may be a sigmoid function. The neural network is a network formed by connecting a plurality of single neurons together. That is, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN), also referred to as a multi-layer neural network, may be understood as a neural network having a plurality of hidden layers. The DNN is divided based on positions of different layers, so that the neural network in the DNN may be divided into three types: an input layer, a hidden layer, and an output layer. Generally, a first layer is the input layer, a last layer is the output layer, and a middle layer is the hidden layer. Layers are fully connected. That is, any neuron at an $i^{th}$ layer is necessarily connected to any neuron at an $(i+1)^{th}$ layer.

Although the DNN seems to be complex, the DNN is actually not complex in terms of work at each layer, and is simply expressed as the following linear relationship expression: $\vec{y}\alpha(W\square\vec{x}+\vec{b})$, where $\vec{x}$ is an input vector, $\vec{y}$ is an output vector, $\vec{b}$ is a bias vector, $W$ is a weight matrix (also referred to as a coefficient), and $\alpha(\ )$ is an activation function. At each layer, the output vector $\vec{y}$ is obtained by performing a simple operation on the input vector $\vec{x}$. Because the DNN has a large quantity of layers, there are also large quantities of coefficients $W$ and bias vectors $\vec{b}$. These parameters are defined in the DNN as follows: The coefficient $W$ is used as an example. It is assumed that in a three-layer DNN, a linear coefficient from a fourth neuron at a second layer to a second neuron at a third layer is defined as $W_{24}^{3}$. The superscript 3 represents a number of a layer at which the coefficient $W$ is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer does not have the parameter $W$. In the deep neural network, more hidden layers make the network more capable of describing a complex case in a real world. Theoretically, a model with more parameters has higher complexity and a larger "capacity", and indicates that the model can be used to complete a more complex learning task. A process of training the deep neural network is a process of learning a weight matrix, and an ultimate goal of the process of training the deep neural network is to obtain a weight matrix (a weight matrix including vectors $W$ of many layers) for all layers in a trained deep neural network.

(3) Loss function

In a process of training the deep neural network, because it is expected that an output of the deep neural network is as close as possible to a value that is actually expected to be predicted, a current predicted value of the network may be compared with a target value that is actually expected, and then a weight vector of each layer in the neural network is updated based on a difference between the current predicted value and the target value (where certainly, there is usually an initialization process before a first update, that is, a parameter is preconfigured for each layer in the deep neural network). For example, if the predicted value of the network is large, the weight vector is adjusted to decrease the predicted value. Adjustment is continuously performed, until the deep neural network can predict the target value that is actually expected or a value extremely close to the target value that is actually expected. Therefore, "how to obtain, through comparison, the difference between the predicted value and the target value" needs to be predefined. This is a loss function (loss function) or an objective function (objective function). The loss function and the objective function are important equations for measuring the difference between the predicted value and the target value. The loss function is used as an example. A higher output value (loss) of the loss function indicates a larger difference. Therefore, training of the deep neural network is a process of minimizing the loss.

(4) Back propagation algorithm

The neural network may correct a value of a parameter in an initial neural network model in a training process by using an error back propagation (back propagation, BP) algorithm, so that a reconstruction error loss of the neural network model becomes smaller. Specifically, an input signal is transferred forward until an error loss occurs at an output, and the parameter in the initial neural network model is updated based on back propagation error loss information, to make the error loss converge. The back propagation algorithm is a back propagation motion mainly dependent on the error loss, and aims to obtain a parameter of an optimal neural network model, for example, a weight matrix.

(5) Natural language processing (natural language processing, NLP)

A natural language (natural language) is a human language, and the natural language processing (NLP) is processing of the human language. The natural language processing is a process of systematic analysis, understanding, and information extraction of text data in an intelligent and efficient manner. The NLP and components thereof can be used to manage very large blocks of text data, or perform a large quantity of automation tasks, and resolve various problems, such as automatic summarization (automatic summarization), machine translation (machine translation, MT), named entity recognition (named entity recognition, NER), relation extraction (relation extraction, RE), information extraction (information extraction, IE), emotion analysis, speech recognition (speech recognition), question answering (question answering), and topic segmentation.

(6) Knowledge graph (knowledge graph, KG)

The knowledge graph is a semantic network that reveals a relationship between entities. On the basis of information, connections between entities are established to form "knowledge". The knowledge graph includes pieces of knowledge. Each piece of knowledge may be represented as a triplet, that is, a triplet including a subject (subject), a relationship, and an object (object), which may be represented as the triplet (subject, relationship, object).

The entities are the subject and the object in the triplet. The entity generally represents a concept and includes a noun or a noun phrase. The relationship is a relationship between two entities, and generally includes a verb, an adjective, or a noun.

For example, knowledge indicated by a triplet (Socrates, teacher, Aristotle) is that Socrates is a teacher of Aristotle.

(7) Mixture of experts (mixture of experts, MoE) system

The mixture of experts system is a neural network architecture. In this architecture, local input data is used to train several linear models. Outputs of these linear models are combined by weights generated by a gate network as an output of a MoE. These linear models are referred to as experts, or may also be referred to as expert networks or expert models.

Specifically, the MoE includes at least one gate network and a plurality of expert networks. Different expert networks have different parameters. The gate network may selectively activate some parameters in the MoE for different input data. In other words, the gate network may select, based on different inputs, different expert networks to participate in actual calculation of a current input.

A same expert network may be deployed on a plurality of devices. In other words, the same expert network deployed on different devices has a same parameter. In this way, the plurality of devices can share the parameter. This helps train a large-scale model, for example, a model with trillions of parameters or even a larger quantity of parameters.

(8) Word vector

A word generally includes two representations in the NLP: one-hot representation (one-hot representation) and distribution representation (distribution representation).

The distribution representation is to map a word or a phrase from a glossary to new space, and represent the word or the phrase by using a real number vector, that is, the word vector. This manner may be referred to as word embedding (word embedding). Word to vector (word to vector, word2vec) is a manner of word embedding.

A word2vec model may include an input layer (input layer), a hidden layer (hidden layer), and an output layer (output layer). The hidden layer is a fully connected layer. As shown in FIG. 2, a weight of a hidden layer in a trained model is a word vector matrix, which may also be referred to as an embedding matrix (embedding matrix).

The word2vec model includes two types of models: a skip-gram (skip-gram) model and a continuous bag-of-words (continuous bag-of-words, CBOW) model.

The skip-gram model is used to generate a word in a context of a word based on the word. In other words, a word is used as an input of the skip-gram model, and a word in a context of the word is used as a target output of the skip-gram model. For example, $w(t)$ is used as an input, and $w(t-1)$, $w(t-2)$, $w(t+1)$, and $w(t+2)$ in a context of $w(t)$ are used as target outputs.

The CBOW model is used to generate a word based on a word in a context of the word. In other words, a word in a context of a word is used as an input of the CBOW model, and the word is used as a target output of the CBOW model. For example, $w(t-1)$, $w(t-2)$, $w(t+1)$, and $w(t+2)$ in a context of $w(t)$ are used as inputs, and $w(t)$ is used as a target output.

FIG. 2 is a schematic diagram of a processing process of a CBOW model. "1" at an input layer represents that a word corresponding to a position of "1" is input, and "0" represents that a word corresponding to a position of "0" is not input. "1" at an output layer represents that a word corresponding to a position of "1" is output, and "0" represents that a word corresponding to a position of "0" is not output. For example, a sentence is that "the dog bark at mailman", "the" and "bark" are contexts of "dog". One-hot codes of "the" and "bark" in the sentence are input into the CBOW model shown in FIG. 2, that is, positions corresponding to "the" and "bark" at the input layer are set to 1. After processing by the CBOW model, a position corresponding to "dog" in an output result is 1, that is, "dog" is output.

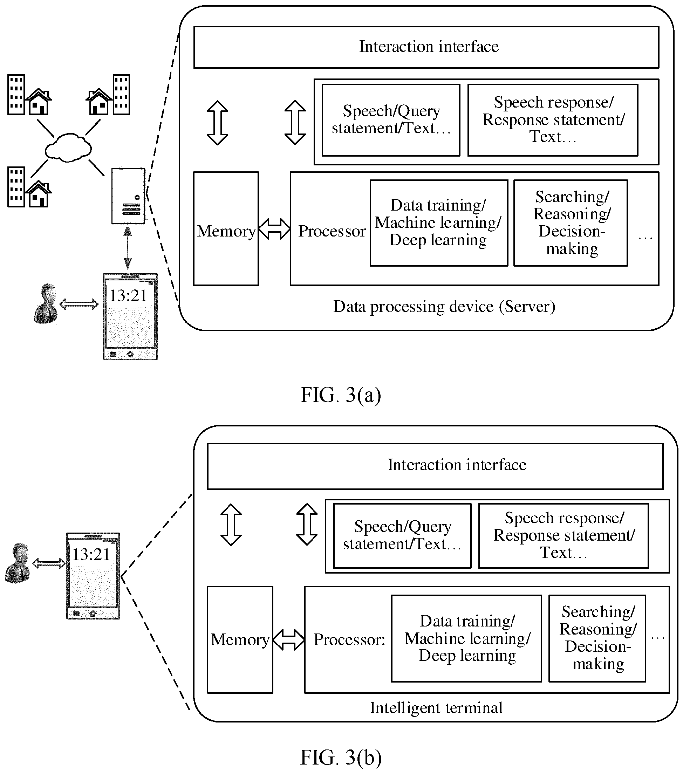

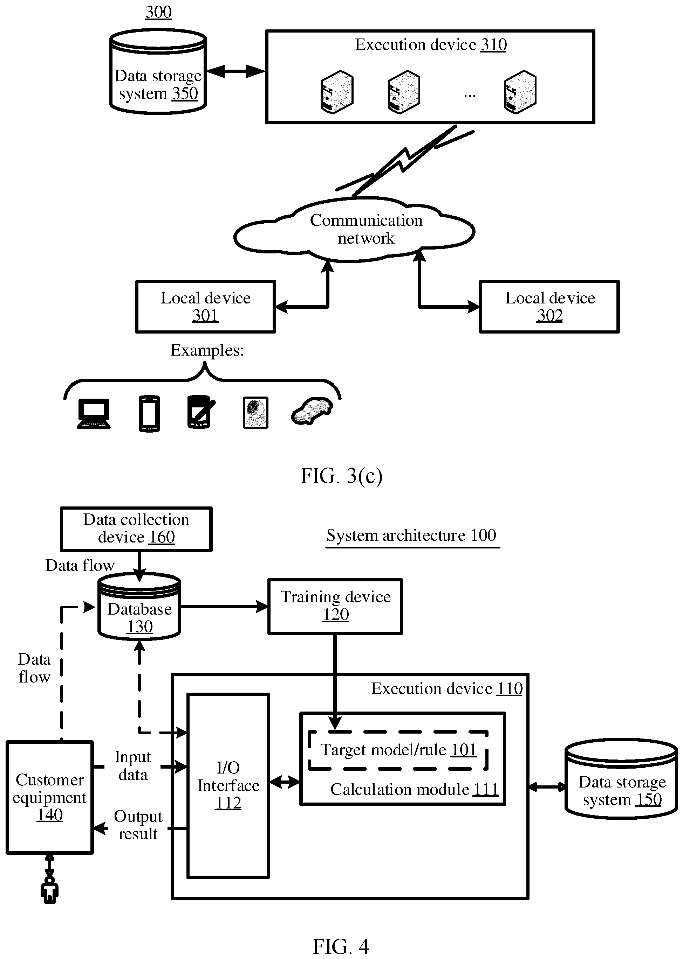

FIG. 3(a), FIG. 3(b), and FIG. 3(c) are schematic diagrams of a natural language processing system according to an embodiment of this application.

As shown in FIG. 3(a), the natural language processing system may include user equipment and a data processing device. The user equipment includes a user and an intelligent terminal such as a mobile phone, a personal computer, or an information processing center. The user equipment is an initiator of natural language data processing. As the initiator of a request for language questioning and answering, querying, or the like, the user generally initiates the request through the user equipment.

The data processing device may be a device or a server that has a data processing function, such as a cloud server, a network server, an application server, or a management server. The data processing device receives, through an interaction interface, a question of a query statement/speech/text or the like from the intelligent terminal, and then performs language data processing by using a memory storing data and a processor processing data in a manner of machine learning, deep learning, searching, reasoning, decision-making, or the like. The memory may be a general name, including a local storage and a database storing historical data. The database may be located on the data processing device, or may be located on another network server.

In the natural language processing system shown in FIG. 3(a), the user equipment may receive instructions of the user. For example, the user equipment may receive a segment of text input by the user, and then initiate a request to the data processing device, so that the data processing device executes a natural language processing application (for example, intention recognition, text classification, text sequence annotation, and translation) for the segment of text obtained by the user equipment, to obtain a processing result (for example, intention recognition, text classification, text sequence annotation, and translation) of a corresponding natural language processing application for the segment of text.

For example, the user equipment may receive a to-be-processed text input by the user, and then initiate a request to the data processing device, so that the data processing device classifies the to-be-processed text, to obtain a classification result for the to-be-processed text. The classification result may refer to a user semantic intention indicated by the to-be-processed text, for example, an intention of the user to indicate song playing, time setting, and navigation enabling. Alternatively, the classification result may indicate an emotion classification result of the user. For example, the classification result may indicate that user emotion classification corresponding to the to-be-processed text is depression, happiness, or anger.

A target neural network model obtained by using a training method for a neural network model in embodiments of this application may be deployed in the data processing device in FIG. 3(a). The target neural network model may be used to execute the natural language processing application (for example, intention recognition, text classification, text sequence annotation, and translation), to obtain a processing result (for example, intention recognition, text classification, text sequence annotation, and translation) of the natural language processing application.

Another application scenario of a natural language processing system is shown in FIG. 3(b). In this scenario, an intelligent terminal is directly used as a data processing device, directly receives an input from a user, and directly performs processing by using hardware of the intelligent terminal. A specific process is similar to that in FIG. 3(a). Refer to the foregoing descriptions, and details are not described herein again.

In the natural language processing system shown in FIG. 3(b), user equipment may receive instructions of the user, and the user equipment processes to-be-processed data to obtain a processing result of the to-be-processed data.

In the natural language processing system shown in FIG. 3(b), the user equipment may receive instructions of the user. For example, the user equipment may receive a segment of text input by the user, and then the user equipment executes a natural language processing application (for example, intention recognition, text classification, text sequence annotation, and translation) for the segment of text, to obtain a processing result (for example, intention recognition, text classification, text sequence annotation, and translation) of a corresponding natural language processing application for the segment of text.

A target neural network model obtained by using a training method for a neural network model in embodiments of this application may be deployed in the user equipment in FIG. 3(b). The target neural network model may be used to execute the natural language processing application (for example, intention recognition, text classification, text sequence annotation, and translation), to obtain a processing result (for example, intention recognition, text classification, text sequence annotation, and translation) of the natural language processing application.

FIG. 3(c) is a schematic diagram of a related device of a natural language processing system according to an embodiment of this application.

The user equipment in FIG. 3(a) and FIG. 3(b) may be specifically a local device 301 or 302 in FIG. 3(c), and the data processing device may be an execution device 310. A data storage system 350 may be integrated on the execution device 310, or may be disposed on a cloud or another network server.

The local device 301 and the local device 302 are connected to the execution device 310 through a communication network.

The execution device 310 may be implemented by one or more servers. Optionally, the execution device 310 may cooperate with another computing device, for example, a device such as a data memory, a router, or a load balancer. The execution device 310 may be disposed on one physical site, or distributed on a plurality of physical sites. The execution device 310 may implement the training method for a neural network model in embodiments of this application by using data in the data storage system 350 or by invoking program code in the data storage system 350.

Specifically, in an implementation, the execution device 310 may perform the following process:

obtaining a first word vector matrix, where the first word vector matrix is obtained through training based on a first training data set of a first service field; obtaining a second training data set; and training a neural network model based on the second training data set, to obtain a target neural network model, where the neural network model includes an expert network layer, the expert network layer includes a first expert network of the first service field, and an initial weight of the first expert network is determined based on the first word vector matrix.

The execution device 310 can obtain a trained neural network, that is, the target neural network model, through the foregoing process. The target neural network model may be used for natural language processing and the like.

For example, users may operate respective user equipments (for example, the local device 301 and the local device 302) to interact with the execution device 310. Each local device may represent any computing device such as a personal computer, a computer workstation, a smartphone, a tablet computer, an intelligent camera, an intelligent vehicle, another type of cellular phone, a media consumption device, a wearable device, a set top box, or a game console.

The local device of each user may interact with the execution device 310 through a communication network of any communication mechanism/communication standard. The communication network may be a wide area network, a local area network, a point-to-point connection, or any combination thereof.

In an implementation, the local device 301 and the local device 302 obtain a related parameter of the target neural network model from the execution device 310, deploy the target model on the local device 301 and the local device 302, and perform speech processing, text processing, or the like by using the target model.

In another implementation, the target neural network model may be directly deployed on the execution device 310. The execution device 310 obtains to-be-processed data from the local device 301 and the local device 302, processes the to-be-processed data by using the target neural network model, and may further return a processing result to the local device 301 and the local device 302.

It should be noted that all functions of the execution device 310 may alternatively be implemented by the local device. For example, the local device 301 implements the function of the execution device 310 and provides a service for the user of the local device 301, or provides a service for the user of the local device 302.

Alternatively, the execution device 310 may be a cloud device. In this case, the execution device 310 may be deployed on a cloud. Alternatively, the execution device 310 may be a terminal device. In this case, the execution device 310 may be deployed on a user terminal side. This is not limited in this embodiment of this application.

As shown in FIG. 4, an embodiment of this application provides a system architecture 100. In FIG. 4, a data collection device 160 is configured to collect training data. For the training method for a neural network model in embodiments of this application, if data is text data, the training data may include a text sequence and a processing result corresponding to the text sequence. For example, the processing result corresponding to the text sequence may be an intention recognition result of the text sequence.

After collecting the training data, the data collection device 160 stores the training data in a database 130, and a training device 120 obtains a target model/rule 101 through training based on the training data maintained in the database 130.

The following describes obtaining of the target model/rule 101 by the training device 120 based on the training data. The training device 120 processes input raw data, and compares an output value with a target value, until a difference between a value output by the training device 120 and the target value is less than a specific threshold. In this way, training of the target model/rule 101 is completed.

The target model/rule 101 can be used to implement the data processing method in embodiments of this application. The target model/rule 101 in this embodiment of this application may be specifically a neural network model. It should be noted that, during actual application, the training data maintained in the database 130 is not necessarily all collected by the data collection device 160, and may be received from another device. It should further be noted that the training device 120 may not necessarily train the target model/rule 101 completely based on the training data maintained in the database 130, or may obtain training data from a cloud or another place to perform model training. The foregoing descriptions should not be construed as a limitation on this embodiment of this application.

The target model/rule 101 obtained through training by the training device 120 may be used in different systems or devices, for example, used in the execution device 110 shown in FIG. 4.

The execution device 110 may be a terminal, for example, a mobile phone terminal, a tablet computer, a notebook computer, augmented reality (augmented reality, AR) AR/virtual reality (virtual reality, VR), or a vehicle-mounted terminal, or may be a server or a cloud. In FIG. 4, the execution device 110 configures an input/output (input/output, I/O) interface 112, configured to exchange data with an external device. The user may input data into the I/O interface 112 through customer equipment 140. The input data in this embodiment of this application may include to-be-processed data input by the customer equipment.

In a process in which the execution device 110 preprocesses the input data, or in a process in which a calculation module 111 of the execution device 110 performs related processing such as calculation, the execution device 110 may invoke data, code, and the like in a data storage system 150 for corresponding processing, and may further store data, instructions, and the like that are obtained through the corresponding processing in the data storage system 150.

Finally, the I/O interface 112 returns a processing result, for example, the foregoing obtained data processing result, to the customer equipment 140, to provide the processing result to the user.

It should be noted that the training device 120 may generate, based on different training data, corresponding target models/rules 101 for different targets or different tasks. The corresponding target models/rules 101 may be used to implement the foregoing targets or complete the foregoing tasks, to provide a required result for the user.

In a case shown in FIG. 4, the user may manually input data and the user may manually input the data on an interface provided by the I/O interface 112. In another case, the customer equipment 140 may automatically send input data to the I/O interface 112. If the customer equipment 140 needs to be authorized by the user to automatically send the input data, the user may set a corresponding permission for the customer equipment 140. The user may view, on the customer equipment 140, a result output by the execution device 110. Specifically, the result may be displayed or presented in a form of a sound, an action, or the like. The customer equipment 140 may alternatively be used as a data collection end, to collect, as new sample data, input data that is input into the I/O interface 112 and an output result that is output from the I/O interface 112 that are shown in the figure, and store the new sample data in the database 130. Certainly, the customer equipment 140 may not perform collection. Instead, the I/O interface 112 directly stores, in the database 130 as new sample data, the input data that is input into the I/O interface 112 and the output result that is output from the I/O interface 112.

It should be noted that FIG. 4 is merely a schematic diagram of a system architecture according to an embodiment of this application. A position relationship between a device, a component, a module, and the like shown in the figure constitutes no limitation. For example, in FIG. 4, the data storage system 150 is an external memory relative to the execution device 110. In another case, the data storage system 150 may alternatively be disposed in the execution device 110.

As shown in FIG. 4, the target model/rule 101 is obtained through training based on the training device 120. The target model/rule 101 in this embodiment of this application may be the target neural network model in this application.

A MoE can be used to increase a quantity of parameters of a model and train a trillion-scale model or even a larger-scale model, to improve performance of the model. However, training time required by using a neural network model using the MoE is long, affecting application of the model.

Embodiments of this application provide a training method for a neural network model. A weight of an expert network in a neural network model is initialized by using a word vector matrix, so that prior knowledge can be provided for model training, training time of the model can be reduced, and training efficiency of the model can be improved.

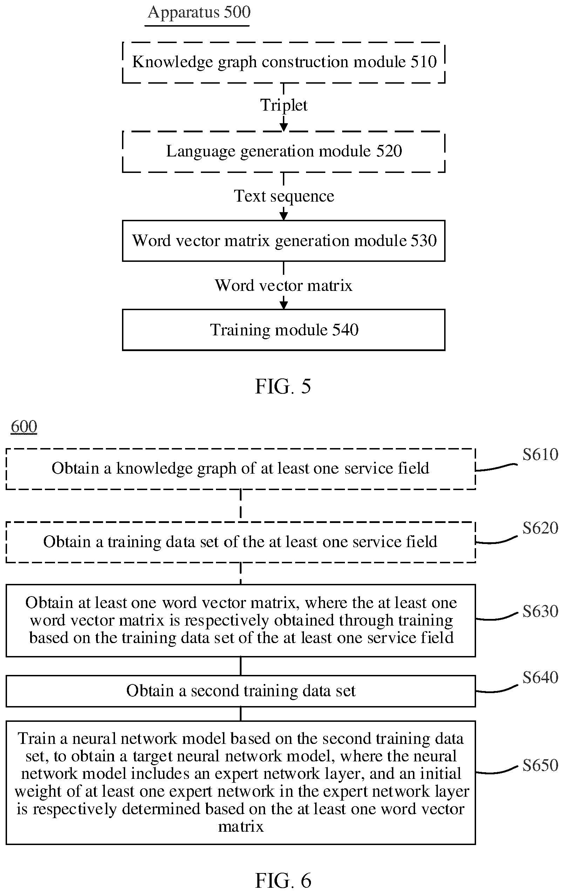

To better describe the training method for a neural network model in embodiments of this application, the following describes a training apparatus for a neural network model in embodiments of this application with reference to FIG. 5. An apparatus 500 shown in FIG. 5 may be deployed on a cloud service device or a terminal device, for example, a device such as a computer, a server, a vehicle, or a mobile phone, or may be deployed on a system including a cloud service device and a terminal device. For example, the apparatus 500 may be the training device 120 in FIG. 4, the execution device 310 in FIG. 3(a), FIG. 3(b), and FIG. 3(c), or a local device.

The apparatus 500 includes a knowledge graph construction module 510, a language generation module 520, a word vector matrix generation module 530, and a training module 540.

The knowledge graph construction module 510 is configured to construct a knowledge graph based on a corpus of a service field.

For example, the knowledge graph may include at least one triplet. For specific descriptions, refer to step S610 in a method 600.

The language generation module 520 is configured to generate at least one text sequence based on the at least one triplet. For specific descriptions, refer to step S620 in the method 600.

The word vector matrix generation module 530 is configured to obtain a word vector matrix through training based on the at least one triplet.

The at least one triplet may form a training data set. In other words, the word vector matrix generation module 530 is configured to obtain the word vector matrix through training based on the training data set. For specific descriptions, refer to step S630 in the method 600.

The training module 540 is configured to train a neural network model to obtain a target neural network model. The target neural network model includes an expert network layer. An initial weight of at least one expert network in the expert network layer is determined based on the word vector matrix. In other words, the initial weight of the at least one expert network in the expert network layer is initialized based on the word vector matrix. For specific descriptions, refer to step S650 in the method 600.

The following describes a training method for a neural network model in embodiments of this application with reference to FIG. 6.

FIG. 6 shows the training method 600 for a neural network model according to an embodiment of this application. The method shown in FIG. 6 may be performed by a cloud service device or a terminal device, for example, an apparatus such as a computer, a server, a vehicle, or a mobile phone, or may be a system including a cloud service device and a terminal device. For example, the method 600 may be performed by the training device 120 in FIG. 4, the execution device 310 in FIG. 3(a), FIG. 3(b), and FIG. 3(c), or a local device.

The method 600 includes step S610 to step S650. The following describes step S610 to step S650 in detail.

S610: Obtain a knowledge graph of at least one service field.

The knowledge graph may be constructed based on a corpus of the service field. For example, the corpus may include a website article or a book.

For example, the knowledge graph may be constructed by using the knowledge graph construction module 510 in the apparatus 500.

Knowledge graphs of different service fields may be respectively constructed based on corpuses of the different service fields.

For example, the at least one service field includes a first service field, and a first knowledge graph of the first service field may be a knowledge graph constructed based on a corpus of the first service field.

Further, the at least one service field further includes a second service field, and a second knowledge graph of the second service field may be a knowledge graph constructed based on a corpus of the second service field.

For example, if the first service field is the financial field, and the second service field is the Internet field, a first knowledge graph of the financial field and a second knowledge graph of the Internet field may be constructed based on a corpus of the financial field and a corpus of the Internet field, respectively. In step S610, the first knowledge graph and the second knowledge graph may be obtained.

For ease of description, in this embodiment of this application, only the first service field and the second service field are used as an example to describe S610. In step S610, knowledge graphs of more service fields or knowledge graphs of fewer service fields may be obtained. A quantity of knowledge graphs is not limited in this embodiment of this application.

For example, one knowledge graph includes at least one triplet.

In other words, a relationship between entities in one knowledge graph is represented in a form of a triplet.

The triplet in the knowledge graph includes three elements: a subject, a relationship, and an object, and may be represented in a form of a triplet (subject, relationship, object), for example, a triplet (Socrates, teacher, Aristotle). The subject and the object may be concepts in a service field of the knowledge graph. The relationship indicates a relationship between the subject and the object.

If a plurality of knowledge graphs are obtained in step S610, each of the plurality of knowledge graphs may include at least one triplet.

For example, the first knowledge graph includes at least one first triplet. Three words in the first triplet respectively represent a subject in the first service field, an object in the first service field, and a relationship between the subject and the object.

The second knowledge graph includes at least one second triplet. Three words in the second triplet respectively represent a subject in the second service field, an object in the second service field, and a relationship between the subject and the object.

It should be understood that "first" in the "first triplet" is merely used to limit the triplet to be a triplet in the first knowledge graph, and has no other limitation function. In other words, all triplets in the first knowledge graph may be referred to as first triplets.

Similarly, "second" in the "second triplet" is merely used to limit the triplet to be a triplet in the second knowledge graph, and has no other limitation function. In other words, all triplets in the second knowledge graph may be referred to as second triplets.

It should be understood that this is merely an example herein, and the knowledge graph may alternatively be represented in other forms than the triplet. This is not limited in this embodiment of this application.

It should be noted that step S610 is an optional step.

S620: Obtain a training data set of the at least one service field.

For example, if the at least one service field includes the first service field, step S620 may include: obtaining a first training data set of the first service field.

Further, if the at least one service field further includes the second service field, step S620 may include: obtaining the first training data set of the first service field and a third training data set of the second service field.

When the method 600 includes step S610, step S620 may include: respectively constructing a training data set of the at least one service field based on the knowledge graph of the at least one service field.

In other words, the training data set of the at least one service field is respectively determined based on the knowledge graph of the at least one service field.

Optionally, the first training data set of the first service field is determined based on the first knowledge graph of the first service field.

Further, the third training data set of the second service field is determined based on the second knowledge graph of the second service field.

For ease of description, in this embodiment of this application, only the first service field and the second service field are used as an example to describe S620. In step S620, more training data sets of the service field or fewer training data sets of the service field may be obtained. For a manner of obtaining a training data set of another service field, refer to a manner of obtaining the first training data set and a second training data set. This is not limited in this embodiment of this application.

Each of the at least one training data set includes at least one text sequence.

For example, the first training data set includes at least one first text sequence.

Further, the third training data set includes at least one second text sequence.

It should be understood that "first" in the "first text sequence" is merely used to limit the text sequence to be a text sequence in the first training data set, and has no other limitation function. In other words, all text sequences in the first training data set may be referred to as first text sequences.

Similarly, "second" in the "second text sequence" is merely used to limit the text sequence to be a text sequence in the third training data set, and has no other limitation function. In other words, all text sequences in the third training data set may be referred to as second text sequences.

Optionally, that the first training data set is determined based on the first knowledge graph includes: The at least one first text sequence in the first training data set is respectively generated based on the at least one first triplet in the first knowledge graph.

That the third training data set is determined based on the second knowledge graph includes: The at least one second text sequence in the third training data set is respectively generated based on the at least one second triplet in the second knowledge graph.

A text sequence may be generated based on a triplet. A text sequence may be considered as a training sample of a word vector generation model.

In other words, a triplet may form a sentence, that is, a text sequence.

For example, a text sequence generated based on the triplet (Socrates, teacher, Aristotle) may be that Socrates is a teacher of Aristotle.

For example, the triplet may be converted into the sentence by using a language model. The language model may be an n-gram (n-gram) language model. For example, n may be 2, or n may be 3.

For example, the language model may be deployed in the language generation module 520 of the apparatus 500. That is, the language generation module 520 converts the triplet into the text sequence.

In step S620, the training data set of the at least one service field may alternatively be constructed in another manner. For example, a plurality of text sequences are separately collected in the at least one service field, to form the training data set of the at least one service field. This is not limited in this embodiment of this application.

For example, obtaining a training data set of at least one service field may be constructing a training data set of the at least one service field, or obtaining a training data set of at least one service field may be receiving a training data set of the at least one service field from another device, or obtaining a training data set of at least one service field may be reading a locally stored training data set of the at least one service field. When the at least one service field includes a plurality of service fields, manners of obtaining training data sets of the plurality of service fields may be the same or may be different. A specific manner of "obtaining" is not limited in this embodiment of this application.

It should be noted that step S620 is an optional step.

S630: Obtain at least one word vector matrix. The at least one word vector matrix is respectively obtained through training based on the training data set of the at least one service field.

When the method 600 includes step S620, step S630 includes: performing training based on the at least one training data set to respectively obtain the at least one word vector matrix.

For example, the at least one word vector matrix may be obtained through training by the word vector matrix generation module 530 in the apparatus 500.

Optionally, step S630 includes: obtaining a first word vector matrix, where the first word vector matrix is obtained through training based on the first training data set.

Optionally, step S630 further includes: obtaining a second word vector matrix, where the second word vector matrix is obtained through training based on a third training data set.

A knowledge graph of a service field can indicate a relationship between entities in the service field, and a training data set of the service field may be constructed by using the knowledge graph of the service field. This helps learn knowledge of the service field for a word vector matrix, and improve a semantic representation capability.

The at least one word vector matrix is respectively a weight of a hidden layer in at least one target word vector generation model. The at least one target word vector generation model is respectively obtained by training the word vector generation model based on the training data set of the at least one service field.

In this case, step S630 may also be understood as obtaining the weight of the hidden layer in the at least one target word vector generation model.

The target word vector generation model is a trained word vector generation model. The word vector generation model is trained based on training data sets of different service fields, to obtain target word vector generation models of the different service fields.

The word vector generation model may include an input layer, a hidden layer, and an output layer. The hidden layer is a fully connected layer. An existing model may be used as the word vector generation model. For example, the word vector generation model may be a CBOW model.

The weight of the hidden layer may also be referred to as an embedding matrix (embedding matrix) or a word vector matrix.

A target word vector model is obtained by training the word vector generation model by using a word other than a target word in at least one text sequence in a training data set of a service field as an input of the word vector generation model and using the target word as a target output of the word vector generation model, and the target word is a word in at least one triplet in a knowledge graph of the service field.

For example, for a text sequence, a word other than a target word in the text sequence is used as an input of the word vector generation model, and the target word is used as a target output of the word vector generation model to train the word vector model. The target word is a word in a triplet corresponding to the text sequence. The target word may be any one of three elements: a subject, an object, and a relationship in the triplet.

The triplet corresponding to the text sequence refers to a triplet used to guide generation of the text sequence. In other words, the text sequence may be generated based on the triplet corresponding to the text sequence.

Optionally, that the first word vector matrix is obtained through training based on the first training data set of the first service field includes: The first word vector matrix is a weight of a hidden layer in a first target word vector generation model, the first target word vector generation model is obtained by training the word vector generation model by using a word other than a target word in the at least one first text sequence as an input of the word vector generation model and using the target word as a target output of the word vector generation model, and the target word is a word in the at least one first triplet.

Optionally, the target word in the at least one first text sequence is an object in the at least one first triplet.

Specifically, the first target word vector generation model is obtained by training the word vector generation model by using a word other than the object in the at least one first triplet in the at least one first text sequence as an input of the word vector generation model and using the object in the at least one first triplet is used as a target output of the word vector generation model.

In other words, for a text sequence, a word other than an object in a first triplet corresponding to the first text sequence in the first text sequence is used as an input of the word vector generation model, and the object in the first triplet corresponding to the first text sequence is used as a target output of the word vector generation model.

The target output may also be understood as a positive sample label of a training sample. In this case, the positive sample label is the object. A negative sample label may be a word pair obtained through negative sampling.

For example, the text sequence is that Socrates is a teacher of Aristotle. A triplet corresponding to the text sequence is a triplet (Socrates, teacher, Aristotle), and an object in the triplet is Aristotle. A word other than Aristotle in the text sequence is used as an input of the CBOW model, that is, (Socrates, is, of, teacher) is used as an input of the CBOW model. Aristotle is used as a target output of the CBOW model.

Optionally, the target word in the at least one first text sequence is a subject in the at least one first triplet.

Specifically, the first target word vector generation model is obtained by training the word vector generation model by using a word other than the subject in the at least one first triplet in the at least one first text sequence as an input of the word vector generation model and using the subject in the at least one first triplet as a target output of the word vector generation model.

In other words, for a first text sequence, a word other than a subject in a first triplet corresponding to the first text sequence in the first text sequence is used as an input of the word vector generation model, and the subject in the first triplet corresponding to the first text sequence is used as a target output of the word vector generation model.

In this case, the positive sample label is the subject. The negative sample label may be a word pair obtained through negative sampling.

For example, the text sequence is that Socrates is a teacher of Aristotle. A triplet corresponding to the text sequence is a triplet (Socrates, teacher, Aristotle), and a subject in the triplet is Socrates. A word other than Socrates in the text sequence is used as an input of the CBOW model, that is, (is, Aristotle, of, teacher) is used as an input of the CBOW model. Socrates is used as a target output of the CBOW model.

Optionally, the target word in the at least one first text sequence is a relationship in the at least one first triplet.

Specifically, the first target word vector generation model is obtained by training the word vector generation model by using a word other than a relationship in the plurality of first triplets in the at least one first text sequence as an input of the word vector generation model and using the relationship in the at least one first triplet as a target output of the word vector generation model.

In other words, for a first text sequence, a word other than a relationship in a triplet corresponding to the first text sequence in the first text sequence is used as an input of the word vector generation model, and the relationship in the triplet corresponding to the first text sequence is used as a target output of the word vector generation model.

In this case, the positive sample label is the relationship. The negative sample label may be a word pair obtained through negative sampling.

For example, the text sequence is that Socrates is a teacher of Aristotle. A triplet corresponding to the text sequence is a triplet (Socrates, teacher, Aristotle), and a relationship in the triplet is the teacher. A word other than the teacher in the text sequence is used as an input of the CBOW model, that is, (Socrates, is, Aristotle, of) is used as an input of the CBOW model. The teacher is used as a target output of the CBOW model.

Optionally, that the second word vector matrix is obtained through training based on a third training data set of the second service field includes:

The second word vector matrix is a weight of a hidden layer in a second target word vector generation model, the second target word vector generation model is obtained by training the word vector generation model by using a word other than a target word in the at least one second text sequence as an input of the word vector generation model and using the target word as a target output of the word vector generation model, and the target word is a word in the at least one second triplet.

For a training process of the second word vector generation model, refer to the training process of the first word vector generation model. In the foregoing training process, the first text sequence is replaced with the second text sequence, and the first triplet is replaced with the second triplet, to obtain the second target word vector generation model through training.

It should be understood that in this embodiment of this application, step S630 is described by using only the first word vector matrix and the second word vector matrix as an example. During actual application, more word vector matrices may be obtained in step S630. This is not limited in this embodiment of this application.

For example, obtaining at least one word vector matrix may be obtaining the at least one word vector matrix through training, or may be receiving the at least one word vector matrix from another device, or may be reading at least one locally stored word vector matrix. A specific manner of "obtaining" is not limited in this embodiment of this application.

S640: Obtain the second training data set.

A type of data in the second training data set is related to a task type of a neural network model.

Optionally, the neural network model may be an NLP model. Correspondingly, the data in the second training data set may be text data.

Optionally, the neural network model may be a speech processing model. Correspondingly, the data in the second training data set may be speech data.

For example, the speech processing model may be an end-to-end speech processing model. For example, the end-to-end speech processing model may be a listen, attend, spell (listen, attend, spell, LAS) model.

For example, an execution device of step S640 may be the training device 120 shown in FIG. 4. The second training data set may be the training data maintained in the database 130 shown in FIG. 4.

S650: Train the neural network model based on the second training data set, to obtain a target neural network model. The neural network model includes an expert network layer, and an initial weight of at least one expert network in the expert network layer is respectively determined based on the at least one word vector matrix.

For example, step S650 may be performed by the training module 540 in the apparatus 500.

Specifically, the expert network layer includes a first expert network of the first service field, and an initial weight of the first expert network is determined based on the first word vector matrix.

Optionally, the expert network layer further includes a second expert network of the second service field, and an initial weight of the second expert network is determined based on the second word vector matrix.

That an initial weight of the at least one expert network is respectively determined based on the at least one word vector matrix may also be understood as that a weight of the at least one expert network is initialized based on the at least one word vector matrix.

The expert network layer includes a plurality of expert networks, and the expert network layer is configured to process, through a target expert network in the plurality of expert networks, data input into the expert network layer. The target expert network is determined based on the data input into the expert network layer.

That is, in a training or reasoning process of the target neural network model, the target expert network is selected based on the data input into the expert network layer.

Optionally, the target expert network may include the first expert network. For example, the expert network layer may process, through the selected first expert network, the data input into the expert network layer, and the first expert network is selected based on the data input into the expert network layer.

Optionally, the target expert network may include the second expert network. For example, the expert network layer may process, through the selected second expert network, the data input into the expert network layer, and the second expert network is selected based on the data input into the expert network layer.

The neural network model is trained based on the second training data set, to obtain the trained neural network model, and the trained neural network model is the target neural network model.

For example, the neural network model may be an existing neural network model.

For example, the neural network model may be a switch transformer model.

Alternatively, the neural network model may be independently constructed. This is not limited in this embodiment of this application, provided that the neural network model includes the expert network layer.

There may be one or more expert network layers. This is not limited in this embodiment of this application.

When the neural network model includes a plurality of expert network layers, initial weights may be determined in the manner in step S650 for some or all of the plurality of expert network layers. For ease of description, in this embodiment of this application, only one expert network layer is used as an example, and constitutes no limitation on the solution in this embodiment of this application.

One expert network layer includes a plurality of expert networks, and parameters of the plurality of expert networks are different.

It should be noted that the plurality of expert networks may be deployed on one device, or may be deployed on a plurality of devices. If the plurality of expert networks are deployed on the plurality of devices, the method 600 may also be understood as being jointly performed by the plurality of devices.

For example, the expert network layer may include a gate network. The gate network may select one or more expert networks to participate in actual calculation of currently input data based on the data input into the expert network layer. In other words, the gate network may route, to one or more expert networks for processing, the data input into the expert network layer. The one or more selected expert networks are the target expert network. A specific manner of determining the target expert network may be an existing solution, for example, a routing manner in the MoE, or a routing manner at a switch layer in a switch transformer. This is not limited in this embodiment of this application. If the target expert network includes a plurality of expert networks, the plurality of expert networks separately process the input data. Outputs of the plurality of expert networks may be combined by using weights generated by the gate network, as an output of the expert network layer. A weight calculation manner may be an existing solution, for example, a calculation manner in the MoE, or a weight calculation manner at the switch layer in the switch transformer. This is not limited in this embodiment of this application.

In other words, for different input data, target expert networks in the expert network layer may be different.

An initial weight of at least one expert network in the expert network layer is determined based on the at least one word vector matrix. In other words, the initial weight of the at least one expert network is determined based on the weight of the hidden layer in the at least one target word vector generation model. In other words, a structure of the at least one expert network is the same as a structure of the hidden layer in the at least one target word vector generation model, and the hidden layer may be a fully connected layer. That is, the weight of the at least one expert network is initialized based on a weight distribution status of the fully connected layer in the at least one target word vector generation model.

Other expert networks than the at least one expert network in the expert network layer may be initialized in an existing manner, for example, random initialization is performed by using a random value generated by Gaussian distribution.

For ease of description, the following uses the first expert network as an example to describe a weight initialization manner.

The first expert network may include one or more expert networks.

In other words, the first word vector matrix may be used to initialize a weight of one expert network or weights of a plurality of expert networks.

Optionally, that an initial weight of the first expert network is determined based on the first word vector matrix includes: The initial weight of the first expert network is the first word vector matrix.

Optionally, that an initial weight of the first expert network is determined based on the first word vector matrix includes: The initial weight of the first expert network is obtained by adjusting the first word vector matrix.

Specifically, one or more values in the first word vector matrix may be adjusted, and an adjusted first word vector matrix is used as the initial weight of the first expert network.

Optionally, that an initial weight of the first expert network is determined based on the first word vector matrix includes: Initial weights of some expert networks in the first expert network are the first word vector matrix, and initial weights of the other expert networks are obtained by adjusting the first word vector matrix.

In this case, the first expert network includes two or more expert networks.

For a weight initialization manner of another expert network, refer to the weight initialization manner of the first expert network. For example, in the foregoing initialization process, the first expert network is replaced with the second expert network, and the initial weight of the second expert network may be obtained by replacing the first word vector matrix with the second word vector matrix.

It should be understood that, in this embodiment of this application, only the first expert network and the second expert network are used as an example to describe step S650. During actual application, weight initialization may alternatively be performed on another expert network in the expert network layer by using the solution in this embodiment of this application. This is not limited in this embodiment of this application.

According to the solution in this embodiment of this application, the word vector matrix is obtained through training based on the training data set, and the word vector matrix includes a large quantity of semantic information. Weights of some or all expert networks in a model are initialized by using the word vector matrix, so that the semantic information can be introduced into the expert network, to provide prior knowledge for the expert network, and reduce training time. Especially for a large-scale neural network model, the solution in this embodiment of this application can greatly reduce training time. In addition, introduction of the semantic information into the expert network can effectively improve a semantic representation capability of the expert network, to improve training performance of the model.

In addition, different word vector matrices are obtained through training based on training data sets of different service fields, and have different semantic information. When different expert networks in the expert network layer are initialized by using different word vector matrices, the different expert networks have different semantic representation capabilities, and semantic combinations of the different expert networks can further improve a semantic understanding capability of a natural language, and further improve performance of the model. For example, the plurality of expert networks in the expert network layer are respectively initialized by using the plurality of word vector matrices, and the plurality of word vector matrices are respectively obtained through training based on training data sets of a plurality of service fields. In this way, the expert network layer has semantic representation capabilities of the plurality of service fields, to improve the semantic understanding capability of the natural language of the model. In a process of applying the target neural network model, data of the service fields may be respectively routed to a corresponding expert network for processing, to further improve performance of the model.

In addition, a knowledge graph of a service field can indicate a relationship between entities in the service field, and a training data set of the service field may be constructed by using the knowledge graph of the service field. This helps learn knowledge of the service field for a word vector matrix, and improve a semantic representation capability.

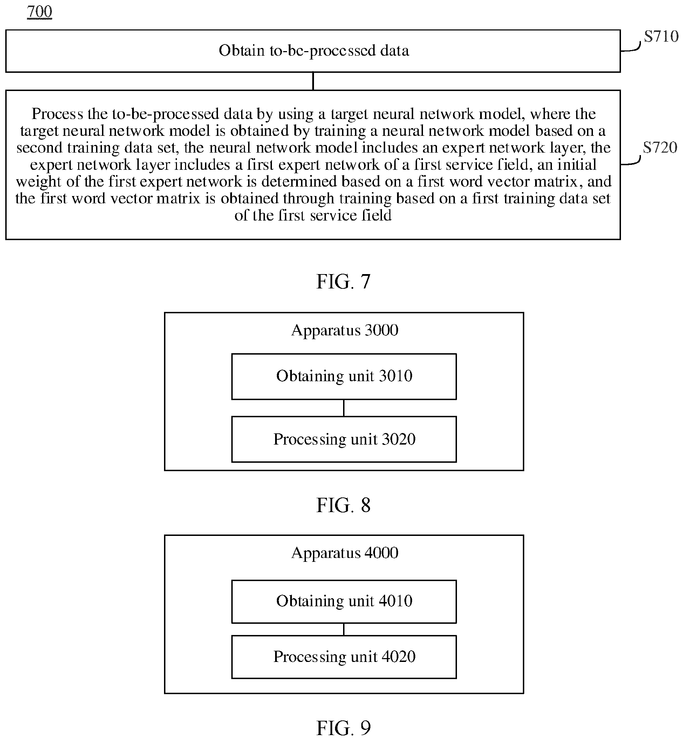

FIG. 7 is a schematic flowchart of a data processing method 700 according to an embodiment of this application. The method may be performed by an apparatus or a device that can perform data processing. For example, the apparatus may be a cloud service device, or may be a terminal device, for example, an apparatus having a computing capability sufficient to perform the data processing method, such as a computer or a server, or may be a system including a cloud service device and a terminal device. For example, the method 700 may be performed by the execution device 110 in FIG. 4, the execution device 310 in FIG. 3(a), FIG. 3(b), and FIG. 3(c), or a local device.

For example, the method 700 may be specifically performed by the execution device 110 shown in FIG. 4, and to-be-processed data in the method 700 may be the input data provided by the customer equipment 140 shown in FIG. 4.

A model used in the data processing method 700 in FIG. 7 may be constructed by using the method in FIG. 6. For a specific implementation of the method 700, refer to the foregoing method 600. To avoid unnecessary repetition, repeated descriptions are appropriately omitted when the method 700 is described below.

The method 700 includes step S710 and step S720. The following describes step S710 and step S720.

S710: Obtain to-be-processed data.

A type of the to-be-processed data is related to a task type of a neural network model.

Optionally, the neural network model may be an NLP model. Correspondingly, the to-be-processed data may be text data.

Optionally, the neural network model may be a speech processing model. Correspondingly, the to-be-processed data may be speech data.

S720: Process the to-be-processed data by using a target neural network model, where the target neural network model is obtained by training the neural network model based on a second training data set, the neural network model includes an expert network layer, the expert network layer includes a first expert network of a first service field, an initial weight of the first expert network is determined based on a first word vector matrix, and the first word vector matrix is obtained through training based on a first training data set of the first service field.

Optionally, the expert network layer further includes a second expert network of a second service field, an initial weight of the second expert network is determined based on a second word vector matrix, and the second word vector matrix is obtained through training based on a third training data set of the second service field.

Optionally, the expert network layer is configured to process, through the selected first expert network, data input into the expert network layer, and the first expert network is selected based on the data input into the expert network layer.

Optionally, the first training data set is determined based on a first knowledge graph of the first service field.

Optionally, that the first training data set is determined based on a first knowledge graph includes: At least one first text sequence in the first training data set is generated based on at least one first triplet in the first knowledge graph, and three words in the first triplet respectively represent a subject in the first service field, an object in the first service field, and a relationship between the subject and the object.

Optionally, that the first word vector matrix is obtained through training based on a first training data set of the first service field includes: The first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

Optionally, that an initial weight of the first expert network is determined based on a first word vector matrix includes: The initial weight of the first expert network is the first word vector matrix.

According to the solution in this embodiment of this application, a word vector matrix is obtained through training based on a training data set, and the word vector matrix includes a large quantity of semantic information. Weights of some or all expert networks in a model are initialized by using the word vector matrix, so that the semantic information can be introduced into the expert network, to provide prior knowledge for the expert network, and reduce training time. Especially for a large-scale neural network model, the solution in this embodiment of this application can greatly reduce training time. In addition, introduction of the semantic information into the expert network can effectively improve a semantic representation capability of the expert network, to improve performance of the target neural network model.

The following describes apparatuses in embodiments of this application with reference to FIG. 8 to FIG. 11. It should be understood that the apparatuses described below can perform the method in the foregoing embodiments of this application. To avoid unnecessary repetition, repeated descriptions are appropriately omitted when the apparatuses in embodiments of this application are described below.

FIG. 8 is a schematic block diagram of a training apparatus for a neural network model according to an embodiment of this application. The apparatus 3000 shown in FIG. 8 includes an obtaining unit 3010 and a processing unit 3020.

The obtaining unit 3010 and the processing unit 3020 may be configured to perform the training method 600 for a neural network model in embodiments of this application.

The obtaining unit 3010 is configured to obtain a first word vector matrix, where the first word vector matrix is obtained through training based on a first training data set of a first service field.

The obtaining unit is further configured to obtain a second training data set.

The processing unit 3020 is configured to train the neural network model based on the second training data set, to obtain a target neural network model, where the neural network model includes an expert network layer, the expert network layer includes a first expert network of the first service field, and an initial weight of the first expert network is determined based on the first word vector matrix.

Optionally, in an embodiment, the obtaining unit 3010 is further configured to obtain a second word vector matrix, where the second word vector matrix is obtained through training based on a third training data set of a second service field, the expert network layer further includes a second expert network of the second service field, and an initial weight of the second expert network is determined based on the second word vector matrix.

Optionally, in an embodiment, the expert network layer is configured to process, through the selected first expert network, data input into the expert network layer, and the first expert network is selected based on the data input into the expert network layer.

Optionally, in an embodiment, the first training data set is determined based on a first knowledge graph of the first service field.

Optionally, in an embodiment, that the first training data set is determined based on a first knowledge graph of the first service field includes: At least one first text sequence in the first training data set is generated based on at least one first triplet in the first knowledge graph, and the first triplet includes a subject in the first service field, an object in the first service field, and a relationship between the subject and the object.

Optionally, in an embodiment, that the first word vector matrix is obtained through training based on a first training data set of a first service field includes: The first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

Optionally, in an embodiment, that an initial weight of the first expert network is determined based on a first word vector matrix includes: The initial weight of the first expert network is the first word vector matrix.

Optionally, in an embodiment, the neural network model is an NLP model or a speech processing model.

FIG. 9 is a schematic block diagram of a data processing apparatus according to an embodiment of this application. The apparatus 4000 shown in FIG. 9 includes an obtaining unit 4010 and a processing unit 4020.

The obtaining unit 4010 and the processing unit 4020 may be configured to perform the data processing method 700 in embodiments of this application.

The obtaining unit 4010 is configured to obtain to-be-processed data.

The processing unit 4020 is configured to process to-be-processed data by using a target neural network model, where the target neural network model is obtained by training a neural network model based on a second training data set, the neural network model includes an expert network layer, the expert network layer includes a first expert network of a first service field, an initial weight of the first expert network is determined based on a first word vector matrix, and the first word vector matrix is obtained through training based on a first training data set of the first service field.

Optionally, in an embodiment, the expert network layer further includes a second expert network of a second service field, an initial weight of the second expert network is determined based on a second word vector matrix, and the second word vector matrix is obtained through training based on a third training data set of the second service field.

Optionally, in an embodiment, the expert network layer is configured to process, through the selected first expert network, data input into the expert network layer, and the first expert network is selected based on the data input into the expert network layer.

Optionally, in an embodiment, the first training data set is determined based on a first knowledge graph of the first service field.

Optionally, in an embodiment, that the first training data set is determined based on a first knowledge graph includes: At least one first text sequence in the first training data set is generated based on at least one first triplet in the first knowledge graph, and three words in the first triplet respectively represent a subject in the first service field, an object in the first service field, and a relationship between the subject and the object.

Optionally, in an embodiment, that the first word vector matrix is obtained through training based on a first training data set of a first service field includes: The first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

Optionally, in an embodiment, that an initial weight of the first expert network is determined based on a first word vector matrix includes: The initial weight of the first expert network is the first word vector matrix.

Optionally, in an embodiment, the neural network model is a natural language processing NLP model or a speech processing model.

It should be noted that the apparatus 3000 and the apparatus 4000 are embodied in a form of functional units. The term "unit" herein may be implemented in a form of software and/or hardware. This is not specifically limited.

For example, the "unit" may be a software program, a hardware circuit, or a combination thereof for implementing the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or another suitable component that supports the described functions.

Therefore, units in the examples described in embodiments of this application can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

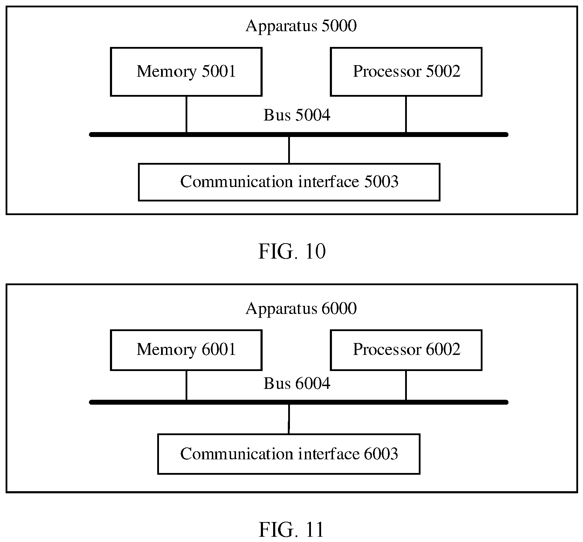

FIG. 10 is a schematic diagram of a hardware structure of a training apparatus for a neural network model according to an embodiment of this application. The training apparatus 5000 for a neural network model shown in FIG. 10 (where the apparatus 5000 may be specifically a computer device) includes a memory 5001, a processor 5002, a communication interface 5003, and a bus 5004. The memory 5001, the processor 5002, and the communication interface 5003 are in a communication connection with each other through the bus 5004.

The memory 5001 may be a read-only memory (read only memory, ROM), a static storage device, a dynamic storage device, or a random access memory (random access memory, RAM). The memory 5001 may store a program. When the program stored in the memory 5001 is executed by the processor 5002, the processor 5002 is configured to perform the steps of the training method for a neural network model in embodiments of this application.

The processor 5002 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the training method for a neural network model in the method embodiments of this application.

The processor 5002 may alternatively be an integrated circuit chip and has a signal processing capability. In an implementation process, the steps of the training method for a neural network model in this application may be completed by using a hardware integrated logic circuit in the processor 5002, or by using instructions in a form of software.

The foregoing processor 5002 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The methods, steps, and logical block diagrams disclosed in embodiments of this application may be implemented or performed. The general-purpose processor may be a microprocessor, or the processor may be any conventional processor, or the like. Steps of the methods disclosed with reference to embodiments of this application may be directly executed and accomplished by a hardware decoding processor, or may be executed and accomplished by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 5001. The processor 5002 reads information in the memory 5001, and completes, in combination with hardware of the processor 5002, functions that need to be performed by units included in the apparatus shown in FIG. 8, or performs the training method for a neural network model in the method embodiments of this application.

The communication interface 5003 is, for example, a transceiver apparatus such as a transceiver but is not limited thereto, to implement communication between the apparatus 5000 and another device or a communication network. For example, a second training data set may be obtained through the communication interface 5003.

The bus 5004 may include a path for transferring information between various components (for example, the memory 5001, the processor 5002, and the communication interface 5003) of the apparatus 5000.

FIG. 11 is a schematic diagram of a hardware structure of a data processing apparatus according to an embodiment of this application. The data processing apparatus 6000 shown in FIG. 11 (where the apparatus 6000 may be specifically a computer device) includes a memory 6001, a processor 6002, a communication interface 6003, and a bus 6004. The memory 6001, the processor 6002, and the communication interface 6003 are in a communication connection with each other through the bus 6004.

The memory 6001 may be a ROM, a static storage device, a dynamic storage device, or a RAM. The memory 6001 may store a program. When the program stored in the memory 6001 is executed by the processor 6002, the processor 6002 is configured to perform the steps of the data processing method in embodiments of this application.

The processor 6002 may be a general-purpose CPU, a microprocessor, an ASIC, a GPU, or one or more integrated circuits, and is configured to execute a related program, to implement the data processing method in the method embodiments of this application.

The processor 6002 may alternatively be an integrated circuit chip and has a signal processing capability. In an implementation process, the steps of the data processing method in this application may be completed by using a hardware integrated logic circuit in the processor 6002, or by using instructions in a form of software.

The foregoing processor 6002 may alternatively be a general-purpose processor, a DSP, an ASIC, an FPGA or another programmable logic device, a discrete gate or a transistor logic device, or a discrete hardware component. The methods, steps, and logical block diagrams disclosed in embodiments of this application may be implemented or performed. The general-purpose processor may be a microprocessor, or the processor may be any conventional processor, or the like. Steps of the methods disclosed with reference to embodiments of this application may be directly executed and accomplished by a hardware decoding processor, or may be executed and accomplished by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 6001. The processor 6002 reads information in the memory 6001, and completes, in combination with hardware of the processor 6002, functions that need to be performed by units included in the apparatus shown in FIG. 9, or performs the data processing method in the method embodiments of this application.

The communication interface 6003 is, for example, a transceiver apparatus such as a transceiver but is not limited thereto, to implement communication between the apparatus 6000 and another device or a communication network. For example, a second training data set may be obtained through the communication interface 6003.

The bus 6004 may include a path for transferring information between various components (for example, the memory 6001, the processor 6002, and the communication interface 6003) of the apparatus 6000.

It should be noted that, although only the memory, the processor, and the communication interface are shown in each of the apparatus 5000 and the apparatus 6000, in a specific implementation process, a person skilled in the art should understand that the apparatus 5000 and the apparatus 6000 each may further include another necessary device for normal running. In addition, based on a specific requirement, a person skilled in the art should understand that the apparatus 5000 and the apparatus 6000 may further include a hardware device for implementing another additional function. In addition, a person skilled in the art should understand that the apparatus 5000 and the apparatus 6000 may include only necessary devices for implementing embodiments of this application, but not necessarily include all the devices shown in FIG. 10 and FIG. 11.

An embodiment of this application further provides a computer-readable medium. The computer-readable medium stores program code to be executed by a device, and the program code is used to perform the training method for a neural network model or the data processing method in embodiments of this application.

An embodiment of this application further provides a computer program product including instructions. When the computer program product runs on a computer, the computer is enabled to perform the data processing method in embodiments of this application.

An embodiment of this application further provides a chip. The chip includes a processor and a data interface. The processor reads, through the data interface, instructions stored in a memory, and performs the training method for a neural network model or the data processing method in embodiments of this application.

Optionally, in an implementation, the chip may further include a memory. The memory stores instructions. The processor is configured to execute the instructions stored in the memory. When the instructions are executed, the processor is configured to perform the training method for a neural network model or the data processing method in embodiments of this application.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or the processor may be any conventional processor, or the like.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM), may be used.

All or some of the foregoing embodiments may be implemented by software, hardware, firmware, or any combination thereof. When software is used to implement embodiments, the foregoing embodiments may be implemented all or partially in a form of a computer program product. The computer program product includes one or more computer instructions or computer programs. When the computer instructions or the computer programs are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive.

It should be understood that the term "and/or" in this specification describes only an association relationship for describing associated objects and represents that three relationships may exist. For example, A and/or B may represent the following three cases: only A exists, both A and B exist, and only B exists. A and B may be singular or plural. In addition, the character "/" in this specification generally represents an "or" relationship between the associated objects, but may also represent an "and/or" relationship. For details, refer to the context for understanding.

In this application, "at least one" refers to one or more, and "a plurality of" refers to two or more. "At least one of the following items (pieces)" or a similar expression thereof refers to any combination of these items, including any combination of single items (pieces) or a plurality of items (pieces). For example, at least one of a, b, or c may represent: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or the units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A training method for a neural network model, comprising:

   obtaining a first word vector matrix, wherein the first word vector matrix is obtained through training based on a first training data set of a first service field;
   obtaining a second training data set; and
   training a neural network model based on the second training data set, to obtain a target neural network model, wherein the neural network model comprises an expert network layer, the expert network layer comprises a first expert network of the first service field, and an initial weight of the first expert network is determined based on the first word vector matrix.

2. The training method according to claim 1, wherein the method further comprises:
   obtaining a second word vector matrix, wherein the second word vector matrix is obtained through training based on a third training data set of a second service field, the expert network layer further comprises a second expert network of the second service field, and an initial weight of the second expert network is determined based on the second word vector matrix.

3. The training method according to claim 1 or 2, wherein the expert network layer is configured to process, through the selected first expert network, data input into the expert network layer, and the first expert network is selected based on the data input into the expert network layer.

4. The training method according to any one of claims 1 to 3, wherein the first training data set is determined based on a first knowledge graph of the first service field.

5. The training method according to claim 4, wherein that the first training data set is determined based on a first knowledge graph of the first service field comprises:
   at least one first text sequence in the first training data set is generated based on at least one first triplet in the first knowledge graph, and three words in the first triplet respectively represent a subject in the first service field, an object in the first service field, and a relationship between the subject and the object.

6. The training method according to claim 5, wherein that the first word vector matrix is obtained through training based on a first training data set of a first service field comprises:
   the first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

7. The training method according to any one of claims 1 to 6, wherein that an initial weight of the first expert network is determined based on the first word vector matrix comprises:
the initial weight of the first expert network is the first word vector matrix.

8. The training method according to any one of claims 1 to 7, wherein the neural network model is a natural language processing NLP model or a speech processing model.

9. A data processing method, comprising:

obtaining to-be-processed data; and
processing the to-be-processed data by using a target neural network model, wherein the target neural network model is obtained by training a neural network model based on a second training data set, the neural network model comprises an expert network layer, the expert network layer comprises a first expert network of a first service field, an initial weight of the first expert network is determined based on a first word vector matrix, and the first word vector matrix is obtained through training based on a first training data set of the first service field.

10. The method according to claim 9, wherein the expert network layer further comprises a second expert network of a second service field, an initial weight of the second expert network is determined based on a second word vector matrix, and the second word vector matrix is obtained through training based on a third training data set of the second service field.

11. The method according to claim 9 or 10, wherein the expert network layer is configured to process, through the selected first expert network, data input into the expert network layer, and the first expert network is selected based on the data input into the expert network layer.

12. The method according to any one of claims 9 to 11, wherein the first training data set is determined based on a first knowledge graph of the first service field.

13. The method according to claim 12, wherein that the first training data set is determined based on a first knowledge graph comprises:
at least one first text sequence in the first training data set is generated based on at least one first triplet in the first knowledge graph, and three words in the first triplet respectively represent a subject in the first service field, an object in the first service field, and a relationship between the subject and the object.

14. The method according to claim 13, wherein that the first word vector matrix is obtained through training based on a first training data set of the first service field comprises:
the first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

15. The method according to any one of claims 9 to 14, wherein that an initial weight of the first expert network is determined based on a first word vector matrix comprises:
the initial weight of the first expert network is the first word vector matrix.

16. The method according to any one of claims 9 to 15, wherein the neural network model is a natural language processing NLP model or a speech processing model.

17. A training apparatus for a neural network model, comprising:

an obtaining unit, configured to obtain a first word vector matrix, wherein the first word vector matrix is obtained through training based on a first training data set of a first service field, wherein
the obtaining unit is further configured to obtain a second training data set; and
a processing unit, configured to:
train a neural network model based on the second training data set, to obtain a target neural network model, wherein the neural network model comprises an expert network layer, the expert network layer comprises a first expert network of the first service field, and an initial weight of the first expert network is determined based on the first word vector matrix.

18. The training apparatus according to claim 17, wherein the obtaining unit is further configured to:

obtain a second word vector matrix, wherein the second word vector matrix is obtained through training based on a third training data set of a second service field, the expert network layer further comprises a second expert network of the second service field, and an initial weight of the second expert network is determined based on the second word vector matrix.

19. The training apparatus according to claim 17 or 18, wherein the expert network layer is configured to process, through the selected first expert network, data input into the expert network layer, and the first expert network is selected based on the data input into the expert network layer.

20. The training apparatus according to any one of claims 17 to 19, wherein the first training data set is determined based on a first knowledge graph of the first service field.

21. The training apparatus according to claim 20, wherein that the first training data set is determined based on a first knowledge graph of the first service field comprises:

at least one first text sequence in the first training data set is generated based on at least one first triplet in the first knowledge graph, and the first triplet comprises a subject in the first service field, an object in the first service field, and a relationship between the subject and the object.

22. The training apparatus according to claim 21, wherein that the first word vector matrix is obtained through training based on a first training data set of a first service field comprises:

the first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

23. The training apparatus according to any one of claims 17 to 22, wherein that an initial weight of the first expert network is determined based on the first word vector matrix comprises:

the initial weight of the first expert network is the first word vector matrix.

24. The training apparatus according to any one of claims 17 to 23, wherein the neural network model is a natural language processing NLP model or a speech processing model.

25. A data processing apparatus, comprising:

an obtaining unit, configured to obtain to-be-processed data; and
a processing unit, configured to process the to-be-processed data by using a target neural network model, wherein the target neural network model is obtained by training a neural network model based on a second training data set, the neural network model comprises an expert network layer, the expert network layer comprises a first expert network of a first service field, an initial weight of the first expert network is determined based on a first word vector matrix, and the first word vector matrix is obtained through training based on a first training data set of the first service field.

26. The apparatus according to claim 25, wherein the expert network layer further comprises a second expert network of a second service field, an initial weight of the second expert network is determined based on a second word vector matrix, and the second word vector matrix is obtained through training based on a third training data set of the second service field.

27. The apparatus according to claim 25 or 26, wherein the expert network layer is configured to process, through the selected first expert network, data input into the expert network layer, and the first expert network is selected based on the data input into the expert network layer.

28. The apparatus according to any one of claims 25 to 27, wherein the first training data set is determined based on a first knowledge graph of the first service field.

29. The apparatus according to claim 28, wherein that the first training data set is determined based on a first knowledge graph comprises:

at least one first text sequence in the first training data set is generated based on at least one first triplet in the first knowledge graph, and three words in the first triplet respectively represent a subject in the first service field, an object in the first service field, and a relationship between the subject and the object.

30. The apparatus according to claim 29, wherein that the first word vector matrix is obtained through training based on a first training data set of the first service field comprises:

the first word vector matrix is a weight of a hidden layer in a first target word vector generation model, the first target word vector generation model is obtained by training a word vector generation model by using a word other than a target word in the at least one first text sequence as an input of the word vector generation model and using the target word as a target output of the word vector generation model, and the target word is a word in the at least one first triplet.

31. The apparatus according to any one of claims 25 to 30, wherein that an initial weight of the first expert network is determined based on a first word vector matrix comprises:
the initial weight of the first expert network is the first word vector matrix.

32. The apparatus according to any one of claims 25 to 31, wherein the neural network model is a natural language processing NLP model or a speech processing model.

33. A training apparatus for a neural network model, comprising a processor and a memory, wherein the memory is configured to store program instructions, and the processor is configured to invoke the program instructions to perform the method according to any one of claims 1 to 8.

34. A data processing apparatus, comprising a processor and a memory, wherein the memory is configured to store program instructions, and the processor is configured to invoke the program instructions to perform the method according to any one of claims 9 to 16.

35. A computer-readable storage medium, wherein the computer-readable medium stores program code to be executed by a device, and the program code is used to perform the method according to any one of claims 1 to 8 or the method according to any one of claims 9 to 16.

36. A computer program product comprising instructions, wherein when the computer program product runs on a computer, the computer is enabled to perform the method according to any one of claims 1 to 8 or the method according to any one of claims 9 to 16.

FIG. 1

FIG. 2

FIG. 3(a)

FIG. 3(b)

300

Data storage system 350

Execution device 310

...

Communication network

Local device 301

Local device 302

Examples:

FIG. 3(c)

Data collection device 160

System architecture 100

Data flow

Database 130

Training device 120

Data flow

Execution device 110

Customer equipment 140

Input data

I/O Interface 112

Target model/rule 101

Calculation module 111

Data storage system 150

Output result

FIG. 4

Apparatus 500

```
┌ ─ ─ ─ ─ ─ ─ ─ ─ ─ ─ ─ ─ ─ ─ ─ ─ ┐
│  Knowledge graph construction module 510  │
└ ─ ─ ─ ─ ─ ─ ─ ─ ┬ ─ ─ ─ ─ ─ ─ ─ ─ ┘
```
Triplet
```
┌ ─ ─ ─ ─ ─ ─ ─ ─ ▼ ─ ─ ─ ─ ─ ─ ─ ─ ┐
│       Language generation module 520        │
└ ─ ─ ─ ─ ─ ─ ─ ─ ┬ ─ ─ ─ ─ ─ ─ ─ ─ ┘
```
Text sequence
```
┌────────────────▼────────────────┐
│  Word vector matrix generation module 530  │
└────────────────────────────────┘
```
Word vector matrix
```
┌─────────────────────────────────┐
│            Training module 540            │
└─────────────────────────────────┘
```

FIG. 5

600

```
┌ ─ ─ ─ ─ ─ ─ ─ ─ ─ ─ ─ ─ ─ ─ ─ ─ ─ ─ ─ ┐
│   Obtain a knowledge graph of at least one service field   │  S610
└ ─ ─ ─ ─ ─ ─ ─ ─ ─ ┬ ─ ─ ─ ─ ─ ─ ─ ─ ─ ┘
```
```
┌ ─ ─ ─ ─ ─ ─ ─ ─ ─ ─ ─ ─ ─ ─ ─ ─ ─ ─ ─ ┐
│  Obtain a training data set of the at least one service field  │  S620
└ ─ ─ ─ ─ ─ ─ ─ ─ ─ ┬ ─ ─ ─ ─ ─ ─ ─ ─ ─ ┘
```
```
┌───────────────────────────────────────┐
│   Obtain at least one word vector matrix, where the at least one   │
│   word vector matrix is respectively obtained through training    │  S630
│   based on the training data set of the at least one service field   │
└───────────────────────────────────────┘
```
```
┌───────────────────────────────────────┐
│             Obtain a second training data set             │  S640
└───────────────────────────────────────┘
```
```
┌───────────────────────────────────────┐
│   Train a neural network model based on the second training data   │
│   set, to obtain a target neural network model, where the neural   │
│   network model includes an expert network layer, and an initial    │  S650
│  weight of at least one expert network in the expert network layer  │
│   is respectively determined based on the at least one word vector  │
│                        matrix                         │
└───────────────────────────────────────┘
```

FIG. 6

700

| Obtain to-be-processed data | S710 |

Process the to-be-processed data by using a target neural network model, where the target neural network model is obtained by training a neural network model based on a second training data set, the neural network model includes an expert network layer, the expert network layer includes a first expert network of a first service field, an initial weight of the first expert network is determined based on a first word vector matrix, and the first word vector matrix is obtained through training based on a first training data set of the first service field

S720

FIG. 7

Apparatus 3000

Obtaining unit 3010

Processing unit 3020

FIG. 8

Apparatus 4000

Obtaining unit 4010

Processing unit 4020

FIG. 9

Apparatus 5000

Memory 5001

Processor 5002

Bus 5004

Communication interface 5003

FIG. 10

Apparatus 6000

Memory 6001

Processor 6002

Bus 6004

Communication interface 6003

FIG. 11

## INTERNATIONAL SEARCH REPORT

| International application No. |
| --- |
| **PCT/CN2022/098621** |

**A. CLASSIFICATION OF SUBJECT MATTER**

G06N 3/02(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, CNKI, USTXT, IEEE: 专家网络, 词向量, 词向量矩阵, 初始化, 训练, 权重, 参数, 网络, 模型, expert network, word vector, embedding matrix, initialization, train, weight, parameter, network, model

**C. DOCUMENTS CONSIDERED TO BE RELEVANT**

| Category* | Citation of document, with indication, where appropriate, of the relevant passages | Relevant to claim No. |
| --- | --- | --- |
| X | CN 110968688 A (BEIJING GRIDSUM TECHNOLOGY CO., LTD.) 07 April 2020 (2020-04-07) description, paragraphs 55-79 | 1-36 |
| X | CN 106294322 A (HARBIN INSTITUTE OF TECHNOLOGY) 04 January 2017 (2017-01-04) description, paragraphs 29-47 | 1-36 |
| X | CN 106599933 A (HARBIN INSTITUTE OF TECHNOLOGY) 26 April 2017 (2017-04-26) description, paragraphs 19-57 | 1-36 |
| A | US 2020364576 A1 (ADOBE INC.) 19 November 2020 (2020-11-19) entire document | 1-36 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 August 2022** | **26 August 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098621**

| Patent document cited in search report | | | Publication date (day/month/year) | Patent family member(s) | Publication date (day/month/year) |
|---|---|---|---|---|---|
| CN | 110968688 | A | 07 April 2020 | None | |
| CN | 106294322 | A | 04 January 2017 | None | |
| CN | 106599933 | A | 26 April 2017 | None | |
| US | 2020364576 | A1 | 19 November 2020 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110773754

- CN 202111014266